# EUROPEAN PATENT SPECIFICATION

(11) **EP 4 459 960 B1**
(45) Date of publication and mention of the grant of the patent: **28.10.2026**
(21) Application number: 22919983.1
(22) Date of filing: 09.12.2022
(51) Int. Cl.: H04L 69/22

(54) **MESSAGE SENDING METHOD, MESSAGE RECEIVING METHOD, INFORMATION SENDING METHOD, AND APPARATUS**
NACHRICHTENSENDEVERFAHREN, NACHRICHTENEMPFANGSVERFAHREN, INFORMATIONSSENDEVERFAHREN UND VORRICHTUNG
PROCÉDÉ D'ENVOI DE MESSAGE, PROCÉDÉ DE RÉCEPTION DE MESSAGE, PROCÉDÉ D'ENVOI D'INFORMATIONS ET APPAREIL

(30) Priority: 17.01.2022 CN 202210049305
(43) Date of publication of application: 06.11.2024
(73) Proprietor: Huawei Technologies Co., Ltd., Shenzhen, Guangdong 518129 (CN)
(72) Inventor: XU, Yanping, Shenzhen, Guangdong 518129 (CN); XIAO, Yaqun, Shenzhen, Guangdong 518129 (CN); LI, Yunxing, Shenzhen, Guangdong 518129 (CN)
(74) Representative: Maiwald GmbH
(86) International application number: PCT/CN2022/137804
(87) International publication number: WO 2023/134350

(56) References cited:
- CN-A- 111 193 653
- CN-A- 111 478 961
- CN-A- 112 702 252
- CN-A- 113 114 576
- US-A1- 2016 323 183
- US-A1- 2019 068 495

## Description

This application claims priority to Chinese Patent Application No. 202210049305.6, filed with the China National Intellectual Property Administration on January 17, 2022 and entitled "PACKET SENDING METHOD, PACKET RECEIVING METHOD, INFORMATION SENDING METHOD, AND APPARATUS".

### TECHNICAL FIELD

This application relates to the communication field, and in particular, to a packet sending method, a corresponding computer program and an apparatus.

### BACKGROUND

An enterprise may use a provider network to transmit and receive corresponding service data, to implement a corresponding service function. In this case, the enterprise that uses the provider network to transmit and receive the service data is a tenant of a provider. A same enterprise tenant may include several terminal devices, and each terminal device may also be referred to as a user.

In the provider network, a value-added service (value-added service, VAS) device may be deployed on a packet forwarding path to provide a value-added service for the tenant of the provider (such as the enterprise tenant). For example, the value-added service such as security, service acceleration, or the like is provided for the tenant. In the VAS value-added service, different VAS processing may be performed for different tenants. Therefore, tenants served by the provider network need to be distinguished, so that the different VAS processing is performed for the different tenants. US 2019/068495 A1 describes a cloud provider that provides services to tenants over a network.

How to distinguish between tenants is a problem that needs to be resolved urgently.

### SUMMARY

Embodiments of this application provide a packet processing method, a corresponding computer program and an apparatus, so that a VAS device can distinguish between tenants. The invention is defined by the appended independent claims. Further embodiments of the invention are defined by the appended dependent claims. Although the invention is only defined by the claims, the below embodiments, examples and aspects are present for aiding in understanding the background and advantages of the invention.

According to a first aspect, an embodiment of this application provides a packet sending method according to claim 1.

In a possible implementation, the first IP packet is an internet protocol version 6 (Internet Protocol version 6, IPv6) packet, and the tenant identifier is carried in an IP extension header of the IPv6 packet. In this case, the VAS device may parse the IP extension header of the first IP packet to obtain the tenant identifier, and further distinguish between the different tenants based on the tenant identifier.

In a possible implementation, the IP extension header of the IPv6 packet may be extended, to add a type length value (type length value, TLV) field to carry the tenant identifier. In this case, the VAS device may obtain the tenant identifier by using the added TLV, and further distinguish between the different tenants based on the tenant identifier.

In a possible implementation, it is considered that a segment routing internet protocol version 6 (Segment Routing Internet Protocol version 6, SRv6) network is widely used, so that the first IP packet may be an SRv6 packet. In this case, the tenant identifier is carried in a segment routing header (segment routing header, SRH) of the IPv6 packet. In this case, the VAS device may parse the SRH of the first IP packet to obtain the tenant identifier, and further distinguish between the different tenants based on the tenant identifier.

In a possible implementation, it is considered that a tag (tag) field of an SRH of the SRv6 packet is not used. Therefore, the tenant identifier may be carried in the tag tag field of the SRH of the IPv6 packet. In this case, the VAS device may obtain the tenant identifier by using the tag field, and further distinguish between the different tenants based on the tenant identifier.

In a possible implementation, if the first IP packet is transmitted and received in application-aware internet protocol version 6 networking (Application-aware Internet Protocol Version 6 Networking, APN6), application information may be carried in an APN extension header of the first IP packet. In this case, the tenant identifier may be carried in the APN extension header. In this case, the VAS device may parse the APN of the first IP packet to obtain the tenant identifier, and further distinguish between the different tenants based on the tenant identifier.

In a possible implementation, when the first IP packet is an internet protocol version 4 (Internet Protocol version 4, IPv4) packet, the tenant identifier is carried in an option (option) field of an IP basic header of the IPv4 packet. In this case, the VAS device may obtain the tenant identifier by using the option field, and further distinguish between the different tenants based on the tenant identifier.

In a possible implementation, during specific implementation of obtaining the first IP packet by the access device, the access device may receive a second IP packet, and obtain the tenant identifier; and then generate the first IP packet based on the second IP packet and the tenant identifier. For example, the access device may add the tenant identifier to a packet header of the second IP packet, to obtain the first IP packet. Because the packet header of the first IP packet includes the tenant identifier, a device, for example, the VAS device, that subsequently receives the first IP packet may distinguish between the different tenants based on the tenant identifier in the first IP packet.

In a possible implementation, before obtaining the first IP packet based on the second IP packet, the access device may receive and store the tenant identifier sent by a control management device, to generate, based on the second IP packet and the tenant identifier, the first IP packet including the tenant identifier and service data.

In a possible implementation, the control management device may include the tenant identifier in a virtual private network (virtual private network, VPN) instance of the tenant, and send the tenant identifier to the access device. In other words, during specific implementation, that the access device receives the tenant identifier sent by the control management device may be that the access device receives the VPN instance that is of the tenant and that is sent by the control management device, where the VPN instance includes the tenant identifier.

In a possible implementation, during specific implementation of obtaining the first internet protocol IP packet by the terminal device, the terminal device may obtain service data and the tenant identifier, and generate, based on the service data and the tenant identifier, the first IP packet including the tenant identifier and the service data. The service data may be used as a payload of the first IP packet, and the tenant identifier is carried in the packet header of the first IP packet. Because the packet header of the first IP packet includes the tenant identifier, a device, for example, the VAS device, that subsequently receives the first IP packet may distinguish between the different tenants based on the tenant identifier in the first IP packet.

In a possible implementation, before generating the first IP packet, the terminal device may receive and store the tenant identifier sent by a control management device, to generate, based on the service data and the tenant identifier, the first IP packet including the tenant identifier and the service data.

According to a second aspect, not part of the claimed invention, an embodiment of this application provides a packet receiving method. The method may be performed by a VAS device. In an example, a first IP packet may be received, where a packet header of the first IP packet includes a tenant identifier of a tenant corresponding to the first IP packet. The packet header of the first IP packet may be an IP basic header of the first IP packet, or may be an IP extension header of the first IP packet. Then, a value-added service corresponding to the tenant identifier is determined. In an example, the VAS device may parse the first IP packet, to obtain the tenant identifier, and then determine, based on the tenant identifier, the value-added service corresponding to the tenant identifier. It can be learned that, according to this solution, there is no need to plan a network in advance to distinguish between tenants, and the VAS device can distinguish between the tenants based on the packet corresponding to the tenant.

In a possible implementation, the VAS device may store tenant information including the tenant identifier and the value-added service. After receiving the IP packet including the tenant identifier, the VAS device may determine the value-added service based on the tenant identifier and the pre-stored tenant information including the tenant identifier and the value-added service. For example, the VAS device may determine, based on the tenant identifier, the tenant information including the tenant identifier, then obtain the value-added service in the tenant information, and perform the value-added service. In this implementation, there is no need to plan the network in advance to distinguish between the tenants, and the VAS device may distinguish between the tenants based on the packet corresponding to the tenant, and perform the value-added behavior corresponding to the tenant.

In a possible implementation, before determining, based on the tenant identifier, the value-added service corresponding to the tenant identifier, the VAS device may receive and store the tenant information that is of the tenant and that is sent by the control management device, where the tenant information includes the tenant identifier and the value-added service. In this way, the VAS device may determine the value-added service based on the tenant identifier and the pre-stored tenant information including the tenant identifier and the value-added service.

According to a third aspect, not part of the claimed invention, an embodiment of this application provides an information sending method. The method may be performed by a control management device. In an example, a tenant identifier of a tenant may be generated, and the tenant identifier of the tenant is sent to a value-added service VAS device and a target device. The target device is a terminal device of the tenant, or the target device is an access device used by the tenant to access a provider network. The VAS device is configured to perform, based on the tenant identifier, a value-added service corresponding to the tenant. A device that receives the tenant identifier may identify the tenant based on the tenant identifier. It can be learned that, according to this solution, there is no need to plan a network in advance to distinguish between tenants. Based on the tenant identifier that is of the tenant and that is pre-generated and delivered by the control management device, and in combination with a tenant identifier added by the target device to the packet, the VAS device may identify the tenant, so that different tenants are distinguished.

In a possible implementation, when the target device is the access device used by the tenant to access the provider network, that the tenant identifier of the tenant is sent to a target device includes: sending a VPN instance of the tenant to the access device, where the VPN instance includes the tenant identifier.

In a possible implementation, that the tenant identifier of the tenant is sent to a value-added service VAS device includes: sending tenant information of the tenant to the VAS device, where the tenant information includes the tenant identifier and the corresponding value-added service.

According to a fourth aspect, an embodiment of this application provides a packet sending apparatus, according to claim 10.

In a possible implementation, the first IP packet is an IPv6 packet, and the tenant identifier is carried in an IP extension header of the IPv6 packet.

In a possible implementation, the tenant identifier is carried in an added TLV field of the IP extension header.

In a possible implementation, the tenant identifier is carried in an SRH of the IPv6 packet.

In a possible implementation, the tenant identifier is carried in a tag tag field of an SRH of the IPv6 packet.

In a possible implementation, the tenant identifier is carried in an APN extension header of the IPv6 packet.

In a possible implementation, the first IP packet is an IPv4 packet, and the tenant identifier is carried in an option field of an IP basic header of the IPv4 packet.

In a possible implementation, the obtaining unit is configured to: receive a second IP packet, and obtain the tenant identifier; and generate the first IP packet based on the second IP packet and the tenant identifier.

In a possible implementation, the obtaining unit is configured to: obtain service data and the tenant identifier, and generate, based on the service data and the tenant identifier, the first IP packet including the tenant identifier and the service data.

In a possible implementation, the apparatus further includes a receiving unit, configured to receive and store the tenant identifier sent by a control management device.

In a possible implementation, the receiving unit is configured to receive and store a virtual private network VPN instance that is of the tenant and that is sent by the control management device, where the VPN instance includes the tenant identifier.

According to a fifth aspect, not part of the claimed invention, an embodiment of this application provides a packet receiving apparatus, including: a receiving unit, configured to receive a first IP packet, where a packet header of the first IP packet includes a tenant identifier of a tenant corresponding to the first IP packet, and the packet header includes an IP basic header or an IP extension header; and a processing unit, configured to perform, based on the tenant identifier, a value-added service corresponding to the tenant.

In a possible implementation, the processing unit is configured to determine the value-added service based on the tenant identifier and pre-stored tenant information including the tenant identifier and the value-added service.

In a possible implementation, the receiving unit is further configured to receive the tenant information that is of the tenant and that is sent by a control management device, where the tenant information includes the tenant identifier and the value-added service. The processing unit is further configured to store the tenant information that is of the tenant and that is sent by the control management device.

According to a sixth aspect, not part of the claimed invention, an embodiment of this application provides an information sending apparatus, including: an obtaining unit, configured to obtain a tenant identifier of a tenant; and a sending unit, configured to send the tenant identifier of the tenant to a value-added service VAS device and a target device. The target device is a terminal device of the tenant, or the target device is an access device used by the tenant to access a provider network. The VAS device is configured to perform, based on the tenant identifier, a value-added service corresponding to the tenant.

In a possible implementation, when the target device is the access device used by the tenant to access the provider network, the sending unit is configured to send a VPN instance of the tenant to the access device, where the VPN instance includes the tenant identifier.

In a possible implementation, the sending unit is configured to send tenant information of the tenant to the VAS device, where the tenant information includes the tenant identifier and the corresponding value-added service.

According to a seventh aspect, not part of the claimed invention, an embodiment of this application provides a packet processing system. The system includes a target device and a VAS device. The target device is configured to: generate a first internet protocol IP packet, where a packet header of the first IP packet includes a tenant identifier of a tenant corresponding to the first IP packet; and send the first IP packet to the value-added service VAS device. The target device is a terminal device of the tenant, or the target device is an access device used by the tenant to access a provider network. The VAS device is configured to: receive the first IP packet; and perform, based on the tenant identifier, a value-added service corresponding to the tenant.

According to an eighth aspect, not part of the claimed invention, an embodiment of this application provides a packet processing system. The system includes a target device, a value-added service VAS device, and a control management device. The control management device is configured to: obtain a tenant identifier of a tenant; and send the tenant identifier to the target device and the VAS device. The target device is a terminal device of the tenant, or the target device is an access device used by the tenant to access a provider network. The target device is configured to: generate a first IP packet corresponding to the tenant; and send the first IP packet to the VAS device, where a packet header of the first IP packet includes the tenant identifier. The VAS device is configured to: receive the first IP packet; and perform, based on the tenant identifier, a value-added service corresponding to the tenant.

According to an ninth aspect an embodiment of this application provides a computer program product including instructions or a computer program, according to claim 11.

### BRIEF DESCRIPTION OF DRAWINGS

To describe the technical solutions in embodiments of this application or a conventional technology more clearly, the following briefly describes the accompanying drawings used to describe embodiments or the conventional technology. It is clear that the accompanying drawings in the following descriptions merely show some embodiments of this application, and a person of ordinary skill in the art may still derive other drawings from these accompanying drawings without creative efforts.
FIG. 1a is a schematic diagram of an example application scenario according to an embodiment of this application;
FIG. 1b is a schematic diagram of an example application scenario according to an embodiment of this application;
FIG. 2 is a signaling interaction diagram of a packet processing method according to an embodiment of this application;
FIG. 3 is a schematic flowchart of a packet processing method according to an embodiment of this application;
FIG. 4 is a schematic flowchart of an information processing method according to an embodiment of this application;
FIG. 5 is a schematic structural diagram of a packet sending apparatus according to an embodiment of this application;
FIG. 6 is a schematic structural diagram of a packet receiving apparatus according to an embodiment of this application;
FIG. 7 is a schematic structural diagram of an information sending apparatus according to an embodiment of this application; and
FIG. 8 is a schematic structural diagram of a device according to an embodiment of this application.

### DESCRIPTION OF EMBODIMENTS

Embodiments of this application provide a packet processing method, an information processing method, and an apparatus, so that a VAS device can distinguish between tenants.

In an IP network, the network may be planned in advance to distinguish between different tenants. An SRv6 network is used as an example. One SRv6 forwarding path may be planned for each tenant. For the forwarding path that includes a plurality of SRv6 paths of a network device, the network device corresponds to different segment identifiers (segment identifiers, SIDs) in each SRv6 path.

In an example, an uplink/downlink interface may be configured for a network device such as a router and a VAS device such as a firewall device. The uplink/downlink interface distinguishes between different tenants by using a sub-interface configuration. Different sub-interfaces on the network device are configured to forward traffic of the different tenants, and different sub-interfaces on the VAS device are bound to the different tenants.

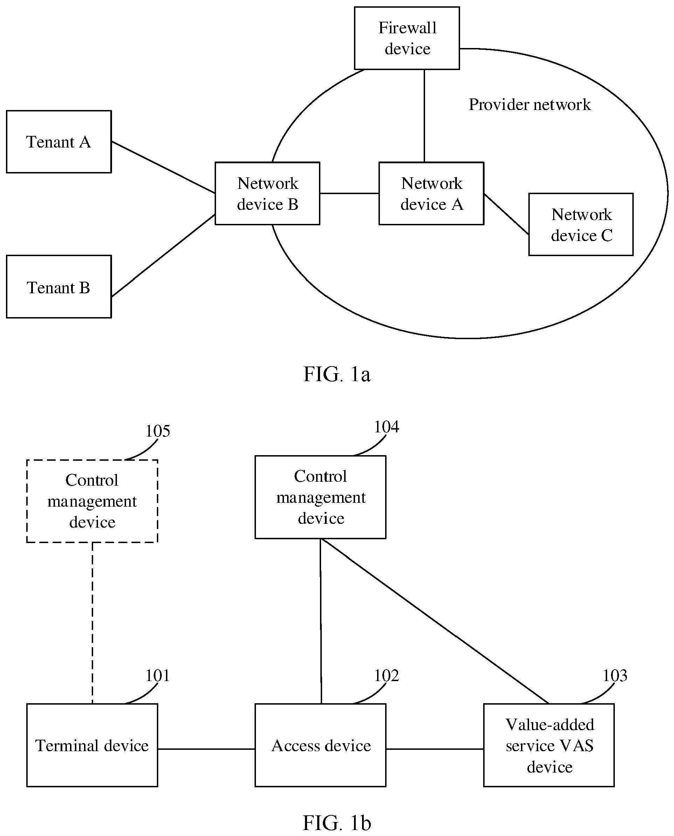

An END.X type of SID may be configured for each sub-interface on the network device. The network device may forward a received SRv6 packet to a corresponding sub-interface based on an SRH of the received SRv6 packet and an SID corresponding to each sub-interface. In SRv6 forwarding paths of service packets of different tenants, the network device corresponds to different SIDs. Therefore, the network device may forward the traffic of the different tenants to different sub-interfaces. Correspondingly, the different sub-interfaces on the VAS device are bound to the different tenants, so that an objective of distinguishing between tenants is achieved. An example is used for description with reference to a scenario shown in FIG. 1a.

For a tenant A and a tenant B, a service packet of the tenant A and a service packet of the tenant B need to be forwarded by a network device A to a firewall device. Both the service packet of the tenant A and the service packet of the tenant B are forwarded by a network device B to the network device A, and then forwarded by the network device A to the firewall device. Certainly, the network device A may alternatively forward the packet of the tenant A and the packet of the tenant B to another network device, for example, a network device C shown in FIG. 1a. The network device A, the network device B, the network device C, and the firewall device may all be devices in a provider network. The network device A, the network device B, the network device C, and the firewall device may be controlled and/or managed by a control management device (not shown in FIG. 1a).

For the tenant A and the tenant B, the service packet of the tenant A and the service packet of the tenant B need to be forwarded by the network device A to the firewall device. Therefore, for the network device A, an SID corresponding to the tenant A and an SID corresponding to the tenant B need to be planned for the network device A. For example, the SID corresponding to the tenant A corresponds to a sub-interface 1 on the network device A, and the SID corresponding to the tenant B corresponds to a sub-interface 2 on the network device A. In this way, the network device A may forward the service packet of the tenant A to the firewall device through the sub-interface 1, and forward the service packet of the tenant B to the firewall device through the sub-interface 2. After the service packet from the tenant A and the service packet from the tenant B separately arrive at the firewall device, the firewall device may determine, based on a sub-interface that receives a service packet, a tenant corresponding to the service packet. For example, a sub-interface 3 on the firewall device is configured to communicate with the sub-interface 1 on the network device, and a sub-interface 4 on the firewall device is configured to communicate with the sub-interface 2 on the network device. In this case, the sub-interface 3 on the firewall device is bound to the tenant A, and the sub-interface 4 on the firewall device is bound to the tenant B. If the firewall device receives a service packet through the sub-interface 3, the firewall device may determine that the service packet corresponds to the tenant A. If the firewall device receives a service packet through the sub-interface 4, the firewall device may determine that the service packet corresponds to the tenant B. In this manner, the service packet of the tenant A is transmitted to the firewall device through one SRv6 path in the provider network, and the service packet of the tenant B is transmitted to the firewall device through another SRv6 path in the provider network. In other words, the tenant A and the tenant B each correspond to one SRv6 path in the provider network.

However, in this manner, the network needs to be planned in advance, and implementation is complex. For example, for the VAS device, one sub-interface needs to be respectively configured for each tenant served by the VAS device. For another example, a corresponding SRv6 path needs to be respectively planned for each tenant.

In addition, because each tenant needs to correspond to one SRv6 path, a large quantity of SRv6 forwarding resources are occupied.

In addition, if a network scenario in which the VAS device is used does not support tenant distinguishing through a sub-interface, for example, traffic received by the VAS device is replicated by an optical splitter, or the VAS device is implemented in a form of a flow probe device, the foregoing solution cannot be implemented.

For FIG. 1a, it should be noted that the tenant A in FIG. 1a may be a terminal device of the tenant A, and the tenant B in FIG. 1a may be a terminal device of the tenant B.

In view of this, embodiments of this application provide a packet processing method. The following describes the method with reference to the accompanying drawings.

FIG. 1b is a schematic diagram of an example application scenario according to an embodiment of this application. As shown in FIG. 1b, a terminal device 101 of a tenant may send a service packet of the tenant to an access device 102 used by the tenant to access a provider network. The access device 102 further forwards the service packet to a VAS device 103, and the VAS device 103 performs VAS processing on the service packet. A control management device 104 may control and/or manage the access device 102 and the VAS device 103, and a control management device 105 may control and/or manage the terminal device 101.

That the control management device 104 controls and/or manages the access device 102 and the VAS device 103 may be as mentioned below: sending a tenant identifier to the access device 102 and the VAS device 103. That the control management device 105 controls and/or manages the terminal device 101 may be as mentioned below: sending the tenant identifier to the terminal device 101.

In an example, the terminal device 102 may correspond to the tenant A or the tenant B in FIG. 1a. Correspondingly, the access device 102 may correspond to the network device B in FIG. 1a, and the VAS device may correspond to the firewall device in FIG. 1a.

In an example, the control management device 104 and the control management device 105 may interact with each other. For example, the control management device 104 and the control management device 105 may directly interact with each other. For another example, the control management device 104 and the control management device 105 may interact with each other via another device (for example, another control management device). For example, the tenant identifier mentioned below may be synchronized between the control management device 104 and the control management device 105. For example, the control management device 104 generates a tenant identifier, and sends the tenant identifier to the control management device 105. For another example, the control management device 105 generates a tenant identifier, and sends the tenant identifier to the control management device 104.

A tenant corresponds to an enterprise.

The access device 102 may be customer premise equipment (customer premise equipment, CPE), or may be a provider edge (provider edge, PE) device. This is not specifically limited in embodiments of this application.

The VAS device 103 may be a device that provides VAS processing, and the VAS device includes but is not limited to a firewall device and a device that runs an intrusion prevention system (intrusion prevention system, IPS).

The control management device 104 may be, for example, a device that runs a network management system (network management system, NMS), or may be, for example, a controller. The control management device may be a device that implements a control function and/or a management function.

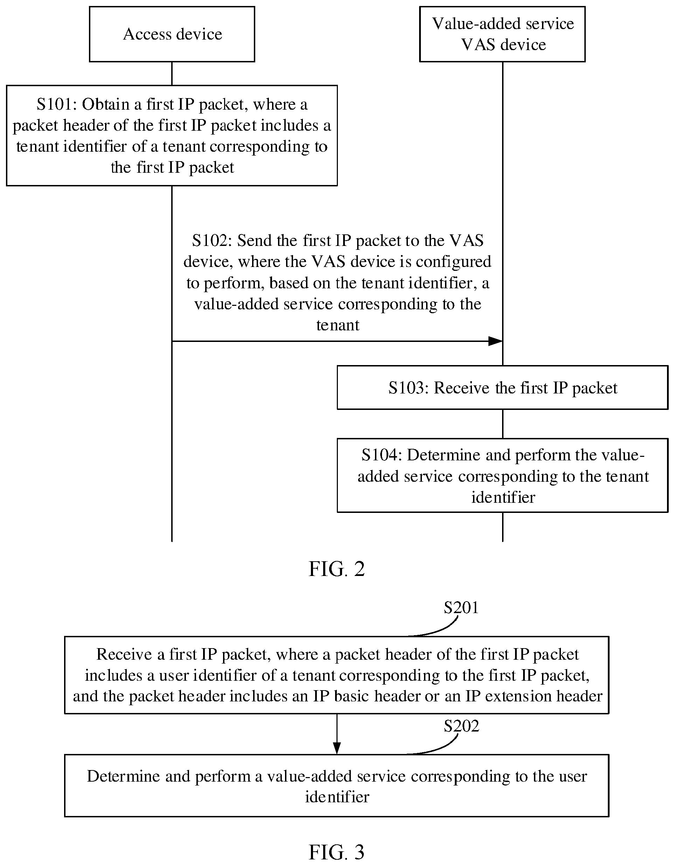

FIG. 2 is a signaling interaction diagram of a packet processing method according to an embodiment of this application. The method shown in FIG. 2 may include, for example, the following S101 to S104.

S101: An access device obtains a first IP packet, where a packet header of the first IP packet includes a tenant identifier of a tenant corresponding to the first IP packet.

The access device mentioned herein may be the access device 102 shown in FIG. 1b.

In this embodiment of this application, the first IP packet may be an IPv4 packet, or may be an IPv6 packet. When the first IP packet is the IPv4 packet, the packet header is an IPv4 packet header. When the first IP packet is the IPv6 packet, the tenant identifier is carried in an IPv6 extension header of the first IP packet.

In an example, when the first IP packet is the IPv6 packet, the tenant identifier may be carried in the IP extension header of the IPv6 packet. In an example, the IP extension header may be extended, to add a new type length value (type length value, TLV) field, and the added TLV field is used to carry the tenant identifier. The IP extension header is not specifically limited in this embodiment of this application, and the IP extension header may be any IPv6 extension header.

In some embodiments, it is considered that currently SRv6 is widely used, and an SRv6 packet includes an SRH. Therefore, the IP extension header may be the SRH. In other words, when the first IP packet is the IPv6 packet, the tenant identifier may be carried in the SRH of the IPv6 packet.

In some other embodiments, in an APN6 network, application information may be carried in an APN extension header of the IPv6 packet. Therefore, the IP extension header may be the APN extension header. In other words, when the first IP packet is the IPv6 packet, the tenant identifier may be carried in the APN extension header of the IPv6 packet. The APN extension header is an IPv6 extension header including an APN attribute. For example, the APN extension header is a destination option header (destination option header, DOH) including the APN attribute, or an HBH header including the APN attribute.

In some embodiments, it is considered that for the IPv6 packet, a tag field of an SRH of the IPv6 packet is currently not used. Therefore, when the first IP packet is the IPv6 packet, the tenant identifier may be carried in the tag field of the SRH of the IPv6 packet. For a structure of the SRH, refer to a related description part of the request for comments (request for comments, RFC) 8754. Details are not described herein.

In another example, when the first IP packet is the IPv4 packet, the tenant identifier may be carried in an IPv4 header of the IPv4 packet. Specifically, an option field of the IPv4 header may be used to carry the tenant identifier.

For the tenant identifier, it should be noted that, to distinguish between different tenants, in this embodiment of this application, the tenant identifier may be a unique identifier in an entire network.

During specific implementation, S101 may be implemented in a plurality of manners. The following describes two possible implementations.

### Implementation 1:

The access device may receive the first IP packet sent by a terminal device. In this case, the terminal device may first obtain the first IP packet, and then send the first IP packet to a VAS device via the access device. The terminal device mentioned herein may be the terminal device 101 shown in FIG. 1b, and the VAS device mentioned herein may be the VAS device 103 shown in FIG. 1b.

During specific implementation of obtaining the first IP packet by the terminal device, the terminal device may first obtain service data and the tenant identifier, and then generate, based on the service data and the tenant identifier, the first IP packet including the tenant identifier and the service data. The service data may be used as a payload of the first IP packet, and the tenant identifier is carried in the packet header of the first IP packet.

In an example, the terminal device may pre-store the tenant identifier. After obtaining the service data, the terminal device may obtain the pre-stored tenant identifier, and generate the first IP packet based on the service data and the tenant identifier.

In some embodiments, the tenant identifier stored on the terminal device may be sent by a control management device. In other words, before generating the first IP packet, the terminal device may further receive and store the tenant identifier sent by the control management device. The control management device mentioned herein may be the control management device 105 shown in FIG. 1b. The control management device may obtain the tenant identifier, and send the tenant identifier to the terminal device. That the control management device may obtain the tenant identifier may be that the control management device generates the tenant identifier, or may be that the control management device receives the tenant identifier sent by another device (for example, the control management device 105 may receive the tenant identifier sent by the control management device 104). A manner in which the control management device generates the tenant identifier is not specifically limited in this embodiment of this application. For example, the control management device may randomly generate the tenant identifier. For another example, a generation specification of the tenant identifier may be pre-determined, and the control management device may generate the tenant identifier according to the generation specification. The generation specification is not specifically limited in this embodiment of this application. In an example, the generation specification may be, for example, that the tenant identifier includes two parts, where a first part is a domain identifier of an enterprise tenant, and a second part is a number corresponding to the enterprise tenant.

### Implementation 2:

The access device may receive a second IP packet, then obtain the tenant identifier, and generate, based on the second IP packet and the tenant identifier, the first IP packet including the tenant identifier. The second IP packet may be a service packet including service data, and the second IP packet may be generated by a terminal and sent to the access device.

After receiving the second IP packet, the access device may obtain a tenant identifier of a tenant corresponding to the second IP packet, and then generate, based on the second IP packet and the tenant identifier, the first IP packet including the tenant identifier. For example, the access device may add the tenant identifier to a packet header of the second IP packet, to obtain the first IP packet.

In an example, the access device may pre-store the tenant identifier. After obtaining the second IP packet, the access device may read the pre-stored tenant identifier, and generate the first IP packet based on the second IP packet and the tenant identifier.

In some embodiments, the tenant identifier stored on the access device may be sent by a control management device (for example, the control management device 104 shown in FIG. 1b). In other words, before generating the first IP packet, the access device may further receive and store the tenant identifier sent by the control management device. The tenant identifier may be pre-obtained by the control management device and sent to the access device. That the control management device pre-obtains the tenant identifier may be that the control management device generates the tenant identifier, or may be that control management device receives the tenant identifier sent by another device (for example, the control management device 104 may receive the tenant identifier sent by the control management device 105). For related content of generating the tenant identifier by the control management device, refer to the foregoing related description part. Details are not described herein again.

In an example, if the access device is a CPE device, the CPE device is in a one-to-one correspondence with the tenant corresponding to the second IP packet. In this case, the control management device may directly send the tenant identifier to the access device, and the access device stores the tenant identifier.

In another example, if the access device is a PE, the access device may receive service packets from a plurality of tenants. In this case, a VPN instance may be allocated to each tenant, and each VPN instance corresponds to different ports of the PE. The PE may determine, based on a port receiving the second IP packet, a VPN instance corresponding to the second IP packet. In this case, when sending a VPN instance of the tenant corresponding to the first IP packet to the access device, the control management device may include the tenant identifier of the tenant in the VPN instance. Correspondingly, the access device may store the VPN instance that is of the tenant corresponding to the first IP packet and that includes the tenant identifier. In this way, after determining the VPN instance corresponding to the second IP packet, the access device may obtain the tenant identifier from the VPN instance.

S102: The access device sends the first IP packet to the VAS device, where the VAS device is configured to perform, based on the tenant identifier, a value-added service corresponding to the tenant.

S103: The VAS device receives the first IP packet.

S104: The VAS device determines and performs the value-added service corresponding to the tenant identifier.

After obtaining the first IP packet, the access device may send the first IP packet to the VAS device. After receiving the first IP packet, the VAS device may determine the tenant corresponding to the first IP packet, and then determine the value-added service corresponding to the tenant. After determining the value-added service, the VAS device may perform the value-added service.

In this embodiment of this application, the VAS device may parse the first IP packet, to obtain the tenant identifier included in the packet header of the first IP packet. Then, the corresponding value-added service is determined based on the tenant identifier.

In an example, the VAS device may pre-store a correspondence between the tenant identifier and the value-added service corresponding to the tenant identifier. After obtaining the tenant identifier based on the first IP packet, the VAS device may obtain the value-added service from prestored data by using the tenant identifier as an index.

In some embodiments, the correspondence may be sent by the control management device to the VAS device. The control management device may generate the tenant identifier corresponding to the tenant, and then send the correspondence between the tenant identifier and the value-added service corresponding to the tenant identifier to the VAS device. After receiving the correspondence, the VAS device may store the correspondence. Certainly, in some other embodiments, the correspondence may alternatively be pre-configured on the VAS device. This is not specifically limited in this embodiment of this application. For related content of generating the tenant identifier by the control management device, refer to the foregoing related description part. Details are not described herein again.

In another example, the VAS device may store tenant information of the tenant, and the tenant information includes the tenant identifier corresponding to the tenant and the value-added service corresponding to the tenant. In this way, after obtaining the tenant identifier based on the first IP packet, the VAS device may find the tenant information corresponding to the tenant by using the tenant identifier as an index, and then obtain the value-added service from the tenant information.

In some embodiments, the tenant information may be sent by the control management device to the VAS device. The control management device may generate the tenant identifier corresponding to the tenant, then obtain the tenant information including the tenant identifier, and further send the tenant information to the VAS device. After receiving the tenant information, the VAS device may store the tenant information. Certainly, in some other embodiments, the tenant information may alternatively be pre-configured on the VAS device. This is not specifically limited in this embodiment of this application. For related content of generating the tenant identifier by the control management device, refer to the foregoing related description part. Details are not described herein again.

For the tenant information, it should be noted that the tenant information is information for describing the tenant. In addition to the tenant identifier and the value-added service, the tenant information may further include other information, for example, a validity period of the value-added service. This is not specifically limited in this embodiment of this application.

In addition, the value-added service is not specifically limited in this embodiment of this application, and the value-added service includes but is not limited to a behavior related to security and/or service acceleration. For example, the value-added service may be that a firewall device (for example, a virtual firewall) processes the first IP packet. For another example, the value-added service may be that an IPS processes the first IP packet. Examples are not listed one by one herein.

It should be noted that the first IP packet is any service packet of the tenant. In an example, for the tenant, a packet header of each service packet of the tenant may include the tenant identifier.

It can be learned from the foregoing descriptions that, according to this solution, there is no need to plan the network in advance. The tenant identifier corresponding to the tenant may be determined based on the service packet corresponding to the tenant, so that different tenants are distinguished.

In addition, in the SRv6 network, there is no need to plan one SRv6 path for each tenant. This reduces occupation of SRv6 forwarding resources. An example is used for description with reference to FIG. 1a. For the tenant A and the tenant B, the service packet of the tenant A and the service packet of the tenant B need to be forwarded by the network device A to the firewall device. According to this solution, for the network device A, there is no need to respectively plan an SID for the tenant A and an SID for the tenant B, and the tenant A and the tenant B may use a same SID. For example, both the tenant A and the tenant B correspond to an SID 1. In this way, the network device A may forward the service packet of the tenant A and the service packet of the tenant B to the firewall device through an interface 1 corresponding to the SID 1. After the service packet from the tenant A and the service packet from the tenant B separately arrive at the firewall device, the firewall device may determine, based on a tenant identifier in a service packet, a tenant corresponding to the service packet. In this manner, the firewall device does not need to bind a sub-interface to a tenant. In addition, the service packet of the tenant A and the service packet of the tenant B can be forwarded to the firewall device through a same SRv6 path in the provider network. There is no need to respectively plan one SRv6 path for the tenant A and the tenant B. In addition, even if the VAS device does not support tenant distinguishing through the sub-interface, for example, traffic received by the VAS device is replicated by an optical splitter, and because the tenant identifier is carried in the packet header in this embodiment of this application, different tenants can be distinguished by using the solution provided in this embodiment of this application.

An embodiment of this application further provides a packet processing method performed by a VAS device. FIG. 3 is a schematic flowchart of a packet processing method according to an embodiment of this application. The method shown in FIG. 3 may be implemented by performing S201 and S202.

S201: Receive a first IP packet, where a packet header of the first IP packet includes a tenant identifier of a tenant corresponding to the first IP packet, and the packet header includes an IP basic header or an IP extension header.

S202: Determine and perform a value-added service corresponding to the tenant identifier.

In a possible implementation, the determining a value-added service corresponding to the tenant identifier includes:
determining the value-added service based on the tenant identifier and a pre-stored correspondence between the tenant identifier and the value-added service.

In a possible implementation, the method further includes:
receiving and storing the correspondence that is between the tenant identifier and the value-added service and that is sent by a control management device.

In a possible implementation, the determining a value-added service corresponding to the tenant identifier includes:
determining the value-added service based on the tenant identifier and pre-stored tenant information including the tenant identifier and the value-added service.

In a possible implementation, the method further includes:
receiving and storing the tenant information that is of the tenant and that is sent by a control management device, where the tenant information includes the tenant identifier and the value-added service.

For a specific implementation of the packet processing method shown in FIG. 3, refer to the foregoing description part of the packet processing method shown in FIG. 2. Details are not described herein again.

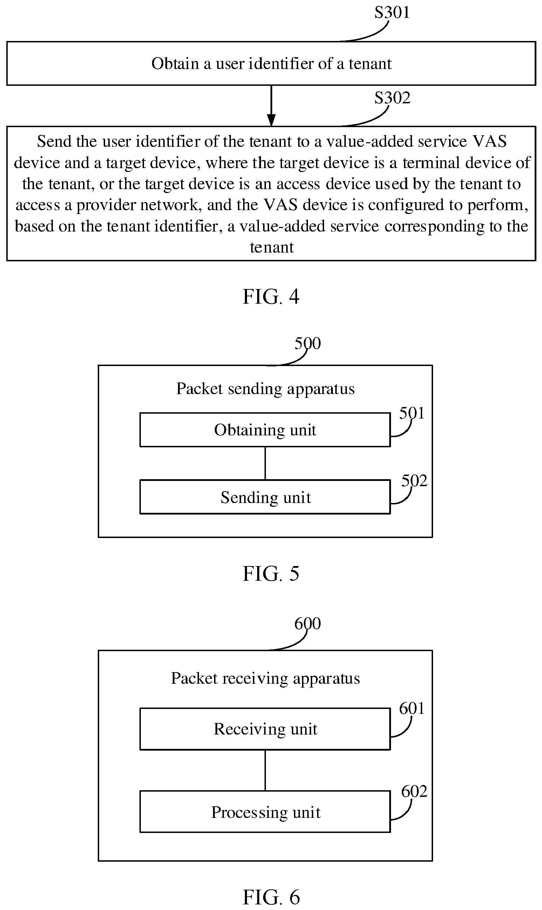

An embodiment of this application further provides an information processing method performed by a control management device. FIG. 4 is a schematic flowchart of an information processing method according to an embodiment of this application. The method shown in FIG. 4 may be implemented by performing S301 and S302.

S301: Obtain a tenant identifier of a tenant.

S302: Send the tenant identifier of the tenant to a value-added service VAS device and a target device. The target device is a terminal device of the tenant, or the target device is an access device used by the tenant to access a provider network. The VAS device is configured to perform, based on the tenant identifier, a value-added service corresponding to the tenant.

In a possible implementation, when the target device is the access device used by the tenant to access the provider network, the sending the tenant identifier of the tenant to a target device includes:
sending a virtual private network VPN instance of the tenant to the access device, where the VPN instance includes the tenant identifier.

In a possible implementation, the sending the tenant identifier of the tenant to a value-added service VAS device includes:
sending tenant information of the tenant to the VAS device, where the tenant information includes the tenant identifier and the corresponding value-added service.

For a specific implementation of the information processing method shown in FIG. 4, refer to the foregoing description part of the packet processing method shown in FIG. 2. Details are not described herein again.

Based on the methods provided in the foregoing embodiments, embodiments of this application further provide a corresponding apparatus. The following describes the apparatus with reference to the accompanying drawings.

FIG. 5 is a schematic structural diagram of a packet sending apparatus according to an embodiment of this application. The apparatus shown in FIG. 5 may be configured to perform steps performed by the terminal device provided in the foregoing method embodiments, or may perform steps performed by the access device provided in the foregoing method embodiments. The packet sending apparatus 500 shown in FIG. 5 may include an obtaining unit 501 and a sending unit 502.

The obtaining unit 501 is configured to obtain a first IP packet, where a packet header of the first IP packet includes a tenant identifier of a tenant corresponding to the first IP packet.

The sending unit 502 is configured to send the first IP packet to a VAS device, where the VAS device is configured to perform, based on the tenant identifier, a value-added service corresponding to the tenant.

In a possible implementation, the first IP packet is an internet protocol version 6 IPv6 packet, and the tenant identifier is carried in an IP extension header of the IPv6 packet.

In a possible implementation, the tenant identifier is carried in an added TLV field of the IP extension header.

In a possible implementation, the tenant identifier is carried in an SRH of the IPv6 packet.

In a possible implementation, the tenant identifier is carried in a tag tag field of an SRH of the IPv6 packet.

In a possible implementation, the tenant identifier is carried in an APN extension header of the IPv6 packet.

In a possible implementation, the first IP packet is an IPv4 packet, and the tenant identifier is carried in an option field of an IP basic header of the IPv4 packet.

In a possible implementation, the obtaining unit 501 is configured to: receive a second IP packet, and obtain the tenant identifier; and generate the first IP packet based on the second IP packet and the tenant identifier.

In a possible implementation, the obtaining unit 501 is configured to: obtain service data and the tenant identifier, and generate, based on the service data and the tenant identifier, the first IP packet including the tenant identifier and the service data.

In a possible implementation, the apparatus further includes a receiving unit, configured to receive and store the tenant identifier sent by a control management device.

In a possible implementation, the receiving unit is configured to receive and store a virtual private network VPN instance that is of the tenant and that is sent by the control management device, where the VPN instance includes the tenant identifier.

Because the apparatus 500 is an apparatus corresponding to the methods provided in the foregoing method embodiments, and a specific implementation of each unit of the apparatus 500 has a same concept as the foregoing method embodiments, for the specific implementation of each unit of the apparatus 500, refer to the descriptions of the foregoing method embodiments. Details are not described herein again.

FIG. 6 is a schematic structural diagram of a packet receiving apparatus according to an embodiment of this application. The apparatus shown in FIG. 6 may be configured to perform steps performed by the VAS device provided in the foregoing method embodiments. The packet receiving apparatus 600 shown in FIG. 6 may include a receiving unit 601 and a processing unit 602.

The receiving unit 601 is configured to receive a first IP packet, where a packet header of the first IP packet includes a tenant identifier of a tenant corresponding to the first IP packet, and the packet header includes an IP basic header or an IP extension header.

The processing unit 602 is configured to determine and perform, based on the tenant identifier, a value-added service corresponding to the tenant.

In a possible implementation, the processing unit 602 is configured to determine the value-added service and perform the value-added service based on the tenant identifier and pre-stored tenant information including the tenant identifier and the value-added service.

In a possible implementation, the receiving unit 601 is further configured to receive the tenant information that is of the tenant and that is sent by a control management device, where the tenant information includes the tenant identifier and the value-added service. The processing unit 602 is further configured to store the tenant information that is of the tenant and that is sent by the control management device.

Because the apparatus 600 is an apparatus corresponding to the methods provided in the foregoing method embodiments, and a specific implementation of each unit of the apparatus 600 has a same concept as the foregoing method embodiments, for the specific implementation of each unit of the apparatus 600, refer to the descriptions of the foregoing method embodiments. Details are not described herein again.

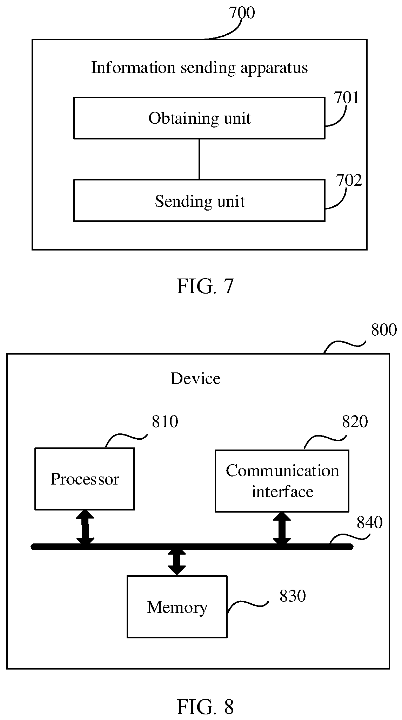

FIG. 7 is a schematic structural diagram of an information sending apparatus according to an embodiment of this application. The apparatus shown in FIG. 7 may be configured to perform steps performed by the control management device provided in the foregoing method embodiments. The information sending apparatus 700 shown in FIG. 7 may include an obtaining unit 701 and a sending unit 702.

The obtaining unit 701 is configured to obtain a tenant identifier of a tenant.

The sending unit 702 is configured to send the tenant identifier of the tenant to a VAS device and a target device. The target device is a terminal device of the tenant, or the target device is an access device used by the tenant to access a provider network. The VAS device is configured to perform, based on the tenant identifier, a value-added service corresponding to the tenant.

In a possible implementation, when the target device is the access device used by the tenant to access the provider network, the sending unit 702 is configured to send a VPN instance of the tenant to the access device, where the VPN instance includes the tenant identifier.

In a possible implementation, the sending unit 702 is configured to send tenant information of the tenant to the VAS device, where the tenant information includes the tenant identifier and the corresponding value-added service.

Because the apparatus 700 is an apparatus corresponding to the methods provided in the foregoing method embodiments, and a specific implementation of each unit of the apparatus 700 has a same concept as the foregoing method embodiments, for the specific implementation of each unit of the apparatus 700, refer to the descriptions of the foregoing method embodiments. Details are not described herein again.

An embodiment of this application further provides a packet processing system. The system includes a target device and a VAS device.

The target device is configured to: generate a first internet protocol IP packet, where a packet header of the first IP packet includes a tenant identifier of a tenant corresponding to the first IP packet; and send the first IP packet to the value-added service VAS device. The target device is a terminal device of the tenant, or the target device is an access device used by the tenant to access a provider network. The VAS device is configured to: receive the first IP packet; and perform, based on the tenant identifier, a value-added service corresponding to the tenant.

In an example, the target device may be the terminal device 101 shown in FIG. 1b. In this case, the system includes the terminal device 101 and the VAS device 103 shown in FIG. 1b.

In another example, the target device may be the access device 102 shown in FIG. 1b. In this case, the system includes the access device 102 and the VAS device 103 shown in FIG. 1b.

An embodiment of this application further provides a packet processing system. The system includes a target device, a value-added service VAS device, and a control management device.

The control management device is configured to: obtain a tenant identifier of a tenant; and send the tenant identifier to the target device and the VAS device. The target device is a terminal device of the tenant, or the target device is an access device used by the tenant to access a provider network. The target device is configured to: generate a first internet protocol IP packet corresponding to the tenant; and send the first IP packet to the VAS device, where a packet header of the first IP packet includes the tenant identifier. The VAS device is configured to: receive the first IP packet; and perform, based on the tenant identifier, a value-added service corresponding to the tenant.

In an example, the target device may be the terminal device 101 shown in FIG. 1b. In this case, the system includes the terminal device 101, the VAS device 103, and the control management device 104 shown in FIG. 1b. Alternatively, the system includes the terminal device 101, the VAS device 103, and the control management device 105 shown in FIG. 1b.

In another example, the target device may be the access device 102 shown in FIG. 1b. In this case, the system includes the access device 102, the VAS device 103, and the control management device 104 shown in FIG. 1b.

It should be noted that hardware structures of the packet sending apparatus 500, the packet receiving apparatus 600, and the information sending apparatus 700 mentioned above may be structures shown in FIG. 8. FIG. 8 is a schematic structural diagram of a device according to an embodiment of this application. In an example, steps performed by the packet sending apparatus 500, the packet receiving apparatus 600, and the information sending apparatus 700 may be implemented in a form of software. In this case, software code used to implement the steps performed by the packet sending apparatus 500, the packet receiving apparatus 600, or the information sending apparatus 700 may be stored in a memory 830 of the device shown in FIG. 8. The processor 810 reads and executes the software code, to implement the steps performed by the packet sending apparatus 500, the packet receiving apparatus 600, and the information sending apparatus 700.

Refer to FIG. 8. The device 800 includes the processor 810, a communication interface 820, and the memory 830. There may be one or more processors 810 in the device 800, and FIG. 8 shows one processor as an example. In embodiments of this application, the processor 810, the communication interface 820, and the memory 830 may be connected through a bus system or in another manner. In FIG. 8, an example in which the processor 810, the communication interface 820, and the memory 830 are connected through a bus system 840 is used.

The processor 810 may be a central processing unit (central processing unit, CPU), a network processor (network processor, NP), or a combination of a CPU and an NP. The processor 810 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The memory 830 may include a volatile memory (English: volatile memory), for example, a random access memory (random access memory, RAM). The memory 830 may alternatively include a non-volatile memory (English: non-volatile memory), for example, a flash memory (English: flash memory), a hard disk drive (hard disk drive, HDD), or a solid-state drive (solid-state drive, SSD). The memory 830 may alternatively include a combination of memories of the foregoing types. For example, the memory 830 may store the foregoing tenant identifier.

Optionally, the memory 830 stores an operating system and a program, an executable module or a data structure, or a subset thereof, or an extended set thereof, where the program may include various operating instructions to implement various operations. The operating system may include various system programs, to implement various basic services and process a hardware-based task. The processor 810 may read the program in the memory 830, to implement the packet sending method performed by the terminal device or the access device, the packet receiving method performed by the VAS device, or the information sending method performed by the control management device provided in embodiments of this application.

The bus system 840 may be a peripheral component interconnect (peripheral component interconnect, PCI) bus, an extended industry standard architecture (extended industry standard architecture, EISA) bus, or the like. The bus system 840 may be classified into an address bus, a data bus, a control bus, and the like. For ease of representation, only one thick line is used for representing the bus system 840 in FIG. 8, but this does not mean that there is only one bus or only one type of bus.

An embodiment of this application further provides a computer-readable storage medium, including instructions or a computer program. When the instructions are run or the computer program is run on a computer, the computer is enabled to perform the packet sending method performed by the terminal device or the access device, the packet receiving method performed by the VAS device, or the information sending method performed by the control management device provided in the foregoing embodiments.

An embodiment of this application further provides a computer program product including instructions or a computer program. When the instructions are run or the computer program is run on a computer, the computer is enabled to perform the packet sending method performed by the terminal device or the access device, the packet receiving method performed by the VAS device, or the information sending method performed by the control management device provided in the foregoing embodiments.

In the specification, claims, and accompanying drawings of this application, the terms "first", "second", "third", "fourth", and or the like (if existent) are intended to distinguish between similar objects but do not necessarily indicate a specific order or sequence. It should be understood that the termsdata used in such a way are interchangeable in proper circumstances, so that embodiments described herein can be implemented in other orders than the order illustrated or described herein. In addition, the terms "include" and "have" and any other variants are intended to cover non-exclusive inclusion. For example, a process, method, system, product, or device that includes a series of steps or units is not necessarily limited to those expressly listed steps or units, but may include other steps or units that are not expressly listed or that are inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, unit division is merely logical service division and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, each service unit in each embodiment of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in the form of the software service unit and sold or used as an independent product, the integrated unit may be stored in a computer-readable storage medium. Based on such an understanding, the technical solutions of this application essentially, or a part contributing to a conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The storage medium includes any medium that can store program code, such as a USB flash drive, a removable hard disk drive, a read-only memory (ROM, Read-Only Memory), a random access memory (RAM, Random Access Memory), a magnetic disk, an optical disc, or the like.

A person skilled in the art should be aware that, in the foregoing one or more examples, services described in the present invention may be implemented by hardware, software, firmware, or any combination thereof. When the services are implemented by using the software, the services may be stored in a computer-readable medium or be transmitted and received as one or more instructions or code in the computer-readable medium. The computer-readable medium includes a computer storage medium and a communication medium, where the communication medium includes any medium that enables a computer program to be transmitted from one place to another. The storage medium may be any usable medium accessible to a general-purpose or a dedicated computer.

The objectives, technical solutions, and beneficial effects of the present invention have been further described in detail in the foregoing specific implementations. It should be understood that the foregoing descriptions are merely specific implementations of the present invention.

The foregoing embodiments are merely intended for describing the technical solutions of this application instead of limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, and the modifications and replacements does not cause the essence of the corresponding technical solutions to depart from the scope of the technical solutions of embodiments of this application.

## Claims

1. A packet sending method, comprising:
obtaining (S101), by an access device, a first internet protocol, IP, packet, wherein a packet header of the first IP packet comprises a tenant identifier of a tenant corresponding to the first IP packet; and
sending (S102), by the access device, the first IP packet to a value-added service, VAS, device, wherein the VAS device is configured to perform, based on the tenant identifier, a value-added service corresponding to the tenant,
wherein the method further comprises:
receiving and storing, by the access device, the tenant identifier sent by a control management device; and
wherein the receiving and storing the tenant identifier sent by a control management device comprises:
receiving and storing a virtual private network VPN instance that is of the tenant and that is sent by the control management device, wherein the VPN instance comprises the tenant identifier.

2. The method according to claim 1, wherein the first IP packet is an internet protocol version 6 IPv6 packet, and the tenant identifier is carried in an IP extension header of the IPv6 packet.

3. The method according to claim 2, wherein the tenant identifier is carried in an added type length value TLV field of the IP extension header.

4. The method according to claim 2 or 3, wherein the tenant identifier is carried in a segment routing header SRH of the IPv6 packet.

5. The method according to claim 2, wherein the tenant identifier is carried in a tag field of an SRH of the IPv6 packet.

6. The method according to claim 2 or 3, wherein the tenant identifier is carried in an application-aware networking APN extension header of the IPv6 packet.

7. The method according to claim 1, wherein the first IP packet is an internet protocol version 4 IPv4 packet, and the tenant identifier is carried in an option field of an IP basic header of the IPv4 packet.

8. The method according to any one of claims 1 to 7, wherein the obtaining a first internet protocol IP packet comprises:
receiving a second IP packet, and obtaining the tenant identifier; and
generating the first IP packet based on the second IP packet and the tenant identifier.

9. The method according to any one of claims 1 to 7, wherein the obtaining a first internet protocol IP packet comprises:
obtaining service data and the tenant identifier, and generating, based on the service data and the tenant identifier, the first IP packet comprising the tenant identifier and the service data.

10. A device (800), comprising a processor (810) and a memory (820), wherein
the memory is configured to store instructions or a computer program; and
the processor is configured to execute the instructions or the computer program, to perform the method according to any one of claims 1 to 9.

11. A computer program product, comprising a program, wherein when the program is run on a processor, the method according to any one of claims 1 to 9 is implemented.

## Patentansprüche

1. Datenpaketsendeverfahren, umfassend:
Erhalten (S101), in einer Zugangsvorrichtung, eines ersten Internetprotokoll-Datenpakets, IP-Datenpakets, wobei eine Datenpaketkopfzeile des ersten IP-Datenpakets eine Mandantenkennung eines Mandanten umfasst, die dem ersten IP-Datenpaket entspricht; und
Senden (S102) des ersten IP-Datenpakets von der Zugangsvorrichtung an eine Mehrwertdienst-Vorrichtung, VAS-Vorrichtung, wobei die VAS-Vorrichtung konfiguriert ist, um, basierend auf der Mandantenkennung, einen Mehrwertdienst durchzuführen, der dem Mandanten entspricht,
wobei das Verfahren ferner umfasst:
Empfangen und Speichern, in der Zugangsvorrichtung, der Mandantenkennung, die von einer Steuerverwaltungsvorrichtung gesendet wird; und
wobei das Empfangen und Speichern der Mandantenkennung, die von einer Steuerverwaltungsvorrichtung gesendet wird, umfasst:
Empfangen und Speichern einer Instanz eines virtuellen privaten Netzwerks, VPN-Instanz, die von dem Mandanten stammt und die von der Steuerverwaltungsvorrichtung gesendet wird, wobei die VPN-Instanz die Mandantenkennung umfasst.

2. Verfahren nach Anspruch 1, wobei das erste IP-Datenpaket ein Datenpaket der Internetprotokoll-Version 6, IPv6-Datenpaket, ist und die Mandantenkennung in einer IP-Erweiterungskopfzeile des IPv6-Datenpakets mitgeführt wird.

3. Verfahren nach Anspruch 2, wobei die Mandantenkennung in einem hinzugefügten Typ-Länge-Wert-Feld, TLV-Feld, der IP-Erweiterungskopfzeile mitgeführt wird.

4. Verfahren nach Anspruch 2 oder 3, wobei die Mandantenkennung in einer Segment-Routing-Kopfzeile, SRH, des IPv6-Datenpakets mitgeführt wird.

5. Verfahren nach Anspruch 2, wobei die Mandantenkennung in einem Tag-Feld einer SRH des IPv6-Datenpakets mitgeführt wird.

6. Verfahren nach Anspruch 2 oder 3, wobei die Mandantenkennung in einer Erweiterungskopfzeile einer anwendungsbewussten Vernetzung, APN-Erweiterungskopfzeile des IPv6-Datenpakets mitgeführt wird.

7. Verfahren nach Anspruch 1, wobei das erste IP-Datenpaket ein Datenpaket der Internetprotokoll-Version 4, IPv4-Datenpaket, ist und die Mandantenkennung in einem Optionsfeld einer IP-Basiskopfzeile des IPv4-Datenpakets mitgeführt wird.

8. Verfahren nach einem der Ansprüche 1 bis 7, wobei das Erhalten eines ersten Internetprotokoll-Datenpakets, IP-Datenpakets, umfasst:
Empfangen eines zweiten IP-Datenpakets und Erhalten der Mandantenkennung; und
Erzeugen des ersten IP-Datenpakets basierend auf dem zweiten IP-Datenpaket und der Mandantenkennung.

9. Verfahren nach einem der Ansprüche 1 bis 7, wobei das Erhalten eines ersten Internetprotokoll-Datenpakets, IP-Datenpakets, umfasst:
Erhalten von Dienstdaten und der Mandantenkennung und Erzeugen, basierend auf den Dienstdaten und der Mandantenkennung, des ersten IP-Datenpakets, das die Mandantenkennung und die Dienstdaten umfasst.

10. Vorrichtung (800), die einen Prozessor (810) und einen Speicher (820) umfasst, wobei:
der Speicher konfiguriert ist zum Speichern von Anweisungen oder eines Computerprogramms; und
der Prozessor konfiguriert ist zum Ausführen der Anweisungen oder des Computerprogramms, um das Verfahren nach einem der Ansprüche 1 bis 9 durchzuführen.

11. Computerprogrammprodukt, das ein Programm umfasst, wobei, wenn das Programm in einem Prozessor ausgeführt wird, das Verfahren nach einem der Ansprüche 1 bis 9 implementiert wird.

## Revendications

1. Procédé d'envoi de paquets, comprenant :
l'obtention (S101), par un dispositif d'accès, d'un premier paquet de protocole Internet, IP, un en-tête de paquet du premier paquet IP comprenant un identifiant de locataire d'un locataire correspondant au premier paquet IP ; et
l'envoi (S102), par le dispositif d'accès, du premier paquet IP à un dispositif de service à valeur ajoutée, VAS, l'équipement VAS étant configuré pour effectuer, sur la base de l'identifiant de locataire, un service à valeur ajoutée correspondant au locataire,
le procédé comprenant en outre :
la réception et la mémorisation, par le dispositif d'accès, de l'identifiant de locataire envoyé par un dispositif de gestion de contrôle ; et
la réception et la mémorisation de l'identifiant de locataire envoyé par un dispositif de gestion de contrôle comprenant :
la réception et la mémorisation d'une instance de réseau privé virtuel VPN qui appartient au locataire et qui est envoyée par le dispositif de gestion de contrôle, l'instance VPN comprenant l'identifiant de locataire.

2. Procédé selon la revendication 1, le premier paquet IP étant un paquet de protocole Internet de version 6 IPv6, et l'identifiant de locataire étant porté dans un en-tête d'extension IP du paquet IPv6.

3. Procédé selon la revendication 2, l'identifiant de locataire étant porté dans un champ de valeur de longueur de type TLV ajoutée de l'en-tête d'extension IP.

4. Procédé selon la revendication 2 ou 3, l'identifiant de locataire étant transporté dans un en-tête de routage de segment SRH du paquet IPv6.

5. Procédé selon la revendication 2, l'identifiant de locataire étant transporté dans un champ de balise d'un SRH du paquet IPv6.

6. Procédé selon la revendication 2 ou 3, l'identifiant de locataire étant transporté dans un en-tête d'extension de réseau sensible aux applications APN du paquet IPv6.

7. Procédé selon la revendication 1, le premier paquet IP étant un paquet de protocole Internet de version 4 IPv4, et l'identifiant de locataire étant porté dans un champ d'option d'un en-tête de base IP du paquet IPv4.

8. Procédé selon l'une quelconque des revendications 1 à 7, l'obtention d'un premier paquet de protocole internet IP comprenant :
la réception d'un second paquet IP, et l'obtention de l'identifiant de locataire ; et
la génération du premier paquet IP sur la base du second paquet IP et de l'identifiant de locataire.

9. Procédé selon l'une quelconque des revendications 1 à 7, l'obtention d'un premier paquet de protocole internet IP comprenant :
l'obtention de données de service et de l'identifiant de locataire, et la génération, sur la base des données de service et de l'identifiant de locataire, du premier paquet IP comprenant l'identifiant de locataire et les données de service.

10. Dispositif (800), comprenant un processeur (810) et une mémoire (820),
la mémoire étant configurée pour mémoriser des instructions ou un programme informatique ; et
le processeur étant configuré pour exécuter les instructions ou le programme informatique, pour réaliser le procédé selon l'une quelconque des revendications 1 à 9.

11. Produit de programme informatique, comprenant un programme, lorsque le programme est exécuté sur un processeur, le procédé selon l'une quelconque des revendications 1 à 9 étant mis en œuvre.
